# EUROPÄISCHE PATENTSCHRIFT

(11) **EP 3 742 865 B1**
(45) Veröffentlichungstag und Bekanntmachung des Hinweises auf die Patenterteilung: **25.08.2021**
(21) Anmeldenummer: 19000254.3
(22) Anmeldetag: 23.05.2019
(51) Int. Cl.: H05B 3/00, C21D 1/40

(54) **VERFAHREN ZUR KONDUKTIVEN ERWÄRMUNG VON GEKRÜMMTEN METALLISCHEN WERKSTÜCKEN, ANLAGE ZUR AUSFÜHRUNG DES VERFAHRENS, SOWIE FELDFÜHRUNGSELEMENT ZUR AUSFÜHRUNG DES VERFAHRENS ODER ALS TEIL DER ANLAGE**
METHOD FOR CONDUCTIVE HEATING OF CURVED METALLIC WORKPIECES, INSTALLATION FOR CARRYING OUT THE METHOD, AND FIELD MANAGEMENT ELEMENT FOR CARRYING OUT THE METHOD OR AS PART OF THE SYSTEM
PROCÉDÉ DE CHAUFFAGE CONDUCTIF DES PIÈCES MÉTALLIQUES COURBÉES, INSTALLATION DESTINÉE À LA MISE EN UVRE DUDIT PROCÉDÉ AINSI QU'ÉLÉMENT DE GUIDAGE DE CHAMP DESTINÉ À LA MISE EN UVRE DUDIT PROCÉDÉ OU EN TANT QUE PARTIE DE L'INSTALLATION

(43) Veröffentlichungstag der Anmeldung: 25.11.2020
(73) Patentinhaber: ITG Induktionsanlagen GmbH, 69434 Hirschhorn/Neckar (DE)
(72) Erfinder: Seidler, Thomas, 67076 Ludwigshafen (DE); von Naumann, Markus, 74869 Schwarzach (DE); Wieder, Andre, 74821 Mosbach (DE)

(56) Entgegenhaltungen:
- BE-A- 488 851
- DE-B- 1 164 586
- FR-A- 990 735
- GB-A- 874 685
- JP-A- S57 164 926

## Beschreibung

Die Erfindung betrifft die konduktive Erwärmung gekrümmter metallischer Werkstücke im Rahmen von Verfahren zur Wärmebehandlung der Werkstücke. Sie betrifft weiter Anlagen zur Ausführung der Verfahren und darüber hinaus Feldführungselemente für den Einsatz bei der Ausführung der Verfahren und als Teil der Anlagen.

Die konduktive Erwärmung von langgestreckten gebogenen Werkstücken, wie Rohrprofilen, z.B. für Stabilisatoren für Kraftfahrzeuge, mit Wechselstrom führt im Allgemeinen zu einer sehr inhomogenen Temperaturverteilung in den Bereichen der Biegungen. Auf der Innenseite einer Biegung ist die Stromdichte größer als auf der Außenseite, was auf die unterschiedlichen Weglängen der Strompfade innen und außen zurückzuführen ist. Abhängig vom Krümmungsradius wird die Innenseite also stärker erwärmt.

Zur Homogenisierung der Temperaturverteilung über die Querschnitte und die Länge des Werkstücks wurden bereits Maßnahmen getroffen, die Innenseiten der Biegungen während des Erwärmungsverlaufs mit einem flüssigen Medium oder Druckluft aktiv zu kühlen und so einer Überhitzung in diesen Werkstückbereichen vorzubeugen. Dieses Vorgehen hat allerdings, wegen der stark variierenden Oberflächenbeschaffenheit, z.B. durch Verzunderungen, und der Ungenauigkeiten der Kühlmittelwirkungen nur eine geringe Prozessstabilität. Ein weiterer entscheidender Nachteil ist, dass die thermische Energie an Biegungen aktiv abgeführt wird. Dadurch entstehen Temperaturunterschiede zu geraden, nicht aktiv gekühlten Bereichen des Werkstücks. Diese Temperaturunterschiede sind abhängig von der Erwärmungszeit und machen längere Erwärmungszeiten notwendig. Für die Serienfertigung mit kurzen Taktzeiten von wärmebehandelten Werkstücken, beispielsweise Stabilisatoren für Kraftfahrzeuge, sind das unakzeptable Begleiterscheinungen.

Als Verbesserung wurde mit der bereits 1975 publizierten deutschen Offenlegungsschrift 24 17 107 vorgeschlagen, am Werkstück in den Innenbereichen der Krümmungen Dämpfungsvorrichtungen aus magnetisch leitfähigem Material, insbesondere aus Eisenblechen, anzuordnen, um dadurch die induktiven Widerstandskomponenten in den Strompfaden zu beeinflussen und so die Werkstückbeheizung zu vergleichmäßigen. Die Dämpfungsvorrichtungen wirken dabei als passive Feldführungselemente zur Beeinflussung der Stromdichteverteilung. Sie können aus einem Bündel von mit ihren Ebenen senkrecht zur Längsachse des Werkstücks ausgerichteten Blechen bestehen, die in einer Tragstruktur gehalten und als Ganzes während der Erwärmung im Bereich der Werkstückkrümmung im Abstand vom Werkstück angeordnet werden, wobei sie das Werkstück berührungslos partiell umgreifen. In einer speziellen Ausführung können die Dämpfungsvorrichtungen aus mit Blechlamellen geschichteten Kernen bestehen. Um die Bleche vor übermäßiger Erwärmung zu bewahren, werden Sie mit Kühlluft oder nebligem Wasser-Luft-Gemisch gekühlt. Als Kühlvorrichtung ist ein einfacher Sprühkopf offenbart.

Aus dem belgischen Patentdokument BE 488 851 A ist ein Verfahren zum Erwärmen von Metallwerkstücken durch direkten Durchgang eines elektrischen Stroms, insbesondere zum Glühen, oder für andere Zwecke der Wärmebehandlung, bekannt, bei dem der elektrische Widerstand des Werkstücks entlang des Weges des dem Werkstück direkt zugeführten Heizstroms beeinflusst wird. Zur Steuerung der Temperaturverteilung in dem Material des Werkstücks wird insbesondere vorgeschlagen, an bestimmten Stellen des Werkstücks diesem benachbarte laminierte Magnetkerne aus Transformatorplatten, Formkernen oder ähnlichen Körpern vorzusehen.

Diese Art der Steuerung der Temperaturverteilung in konduktiv erwärmten Metallteilen ist auch aus dem französischen Patentdokument FR 990 735 A bekannt. Auch in dieser Schrift ist offenbart, dazu den elektrischen Widerstand des Werkstücks entlang des Pfades für den Heizstrom zu beeinflussen. Dies geschieht auch hier mit am Werkstück in geeigneter Weise angeordneten laminierten Magnetkernen aus insbesondere Transformatorplatten.

Die zuerst genannte Lösung nach der deutschen Offenlegungsschrift 24 17 107 verbessert zwar insgesamt die zuvor bekannten Verfahren, bei denen die Innenseiten des Werkstücks im Innenbereich der Krümmungen aktiv mit Wasser oder Luft gekühlt werden. Es weist aber ebenfalls den Mangel auf, dass sehr viel Prozesswärme durch die Sprühkühlung verloren geht, da das Kühlmedium nicht nur die Dämpfungsbleche erreicht, sondern auch direkt die Werkstückoberfläche. Auch hier ist die Prozessstabilität deshalb nur gering. Die Dämpfungsvorrichtungen sind zudem großvolumig und sperrig und deshalb in einer Fertigungsanlage nicht gerade einfach in ihrer Lage zu verändern. Fakt ist, dass dieses Verfahren in mehr als vier Jahrzehnten seit seiner Veröffentlichung von der Fachwelt nicht aufgegriffen und in der industriellen Praxis bis heute nirgendwo angewandt worden ist. Die Ursache könnte in seinen Mängeln liegen, aber auch darin, dass die notwendige Prozesstechnik für Automatisierung, Sensorik oder auch die Temperaturerfassung mit Wärmebildkameras in früheren Zeiten nicht zur Verfügung stand.

Von diesem Stand der Technik ausgehend, ist es das Ziel der Erfindung, das nach der genannten Offenlegungsschrift bekannte Verfahren bezüglich seiner Mängel zu verbessern und dahingehend weiter zu entwickeln, dass es für seine Ausführung in einer insbesondere für die automatisierte Serienfertigung wärmebehandelter Werkstücke vorgesehenen Anlage bei kurzen Taktzeiten in optimaler Weise geeignet ist.

Diese Aufgabe wird bezüglich des Verfahrens dadurch gelöst, dass für ein Verfahren der bekannten Art, mit den Merkmalen des Oberbegriffs des Anspruchs 1, die weiteren Merkmale vorgesehen sind, dass
- Feldführungselemente zum Einsatz kommen, die mit zu einem Paket verschweißten Blechen in U-Form gebildet sind, und
- dass das Blechpaket innerhalb einer einen Kühlmantel bildenden Fassung aufgenommen ist,
- wobei der Kühlmantel zur Kühlung des Blechpakets von einem Kühlmedium, insbesondere Wasser, durchströmt wird.

Der Kerngedanke der Erfindung liegt somit darin, einen Kühlmantel und ein Blechpaket als eine sehr kompakte Baueinheit zu einem Feldführungselement zusammenzufassen. Die Kühlung der Bleche ist somit in dem Feldführungselement integriert. Die Kühlleistung lässt sich über den Durchfluss durch den Kühlmantel problemlos einfach beeinflussen. Prozesswärme von der Oberfläche des Werkstücks wird nicht abgeführt. Eine hohe Prozessstabilität ist erreichbar. Notwendige Positionsänderungen der Feldführungselemente während des Ablaufs der Wärmebehandlung lassen sich aufgrund der kompakten Bauweise anlagentechnisch einfach realisieren.

Gemäß Anspruch 2 ist das erfindungsgemäße Verfahren mit Verwendung von kompakten Feldführungselementen entsprechend Anspruch 1, vorteilhaft nicht nur für Wärmebehandlungen zum Härten, sondern auch zum Anlassen ausführbar. Auch für den Anlassvorgang bewirken die Feldführungselemente eine sehr gute Homogenisierung der Wärmeverteilung.

Nach Anspruch 3 ist das kombinierte Wärmehandlungsverfahren zum Härten und zum anschließenden Anlassen des Werkstücks in einer Anlage mit einer einzigen Konduktionseinheit oder alternativ in einer Anlage mit zwei Konduktionseinheiten, die eine für das Aufheizen zum Härten und die andere für die Erwärmung für das Anlassen, ausführbar.

Entsprechend Anspruch 4 kann das kombinierte Verfahren zum Härten und zum Anlassen bei Verwendung von kompakten Feldführungselementen im Wesentlichen automatisiert ausgeführt werden.

Eine Anlage zur Ausführung des Verfahrens nach Anspruch 3 bei Verwendung von kompakten Feldführungselementen entsprechend Anspruch 1 ist in Anspruch 5 angegeben.

Anspruch 6 betrifft eine vorteilhafte zusätzliche Ausstattung der Anlage nach Anspruch 5 zur Ermöglichung eines automatisierten Verfahrensablaufs.

Die Ansprüche 7 und 8 betreffen anlagentechnisch besonders vorteilhafte Nachführungen von Einspannklemmen und Feldführungselementen während der Erwärmung des Werkstücks.

Mit Anspruch 9 ist ein selbständiger Schutz für die Feldführungselemente nach der Erfindung beansprucht.

Anspruch 10 betrifft die vorteilhafte Ausbildung der Feldführungselemente nach Anspruch 9 als in eine Kupferfassung eingelötete Blechpakete, wobei die Kupferfassung den Kühlmantel bildet.

Nachfolgend wird die Erfindung unter Bezugnahme auf die Zeichnung weiter im Rahmen von Ausführungsbeispielen erläutert.
Figur 1 zeigt in schematisierter Darstellung einen zweifach gekrümmten Bereich eines Werkstücks mit hier lediglich angedeuteten, an die Krümmungen herangefahrenen Feldführungselementen.
Figur 2 zeigt in mehreren Ansichten ein einzelnes Feldführungselement.

Das einer Wärmebehandlung zu unterziehende Werkstück kann ein rohrförmiger, mehrfach gekrümmter Stabilisator für ein Kraftfahrzeug sein. Durch Heranführen der Feldführungselemente, die in ihrer Geometrie dem Werkstück angepasst sind, an den Stabilisator, wird die Stromdichteverteilung in den Bereichen der Krümmungen gezielt verschoben. Die dem Feldführungselement zugewandten Stellen des Stabilisators erfahren dabei eine Erhöhung des induktiven Widerstands, so dass hier die Stromdichte und somit die generierte Leistung reduziert wird.
Die Feldführungselemente umfassen zwei Schenkel mit hoher magnetischer Leitfähigkeit, die durch eine Brücke aus dem gleichen Material verbunden sind. Es entsteht eine U-Form, die insgesamt aus zu einem Paket verschweißten einzelnen Trafoblechen in U-Form gebildet ist. Dieses Paket wird in eine mit Wasser aktiv gekühlte Kupferfassung eingelötet, um eine Kühlung des Blechpakets im Dauerbetrieb sicherzustellen. Die Kupferfassung wirkt als Kühlmantel. Das Blechpaket und der Kühlmantel bilden zusammen ein kompakt aufgebautes Feldführungselement.

In einer abgewandelten Ausführungsform können mehrere Feldführungselemente für eine Biegung vorgesehen sein. Das ist bei schwer zu erreichenden Biegungen des Stabilisators wichtig. Mehrere schmale Feldführungselemente wirken dann als Verbund.

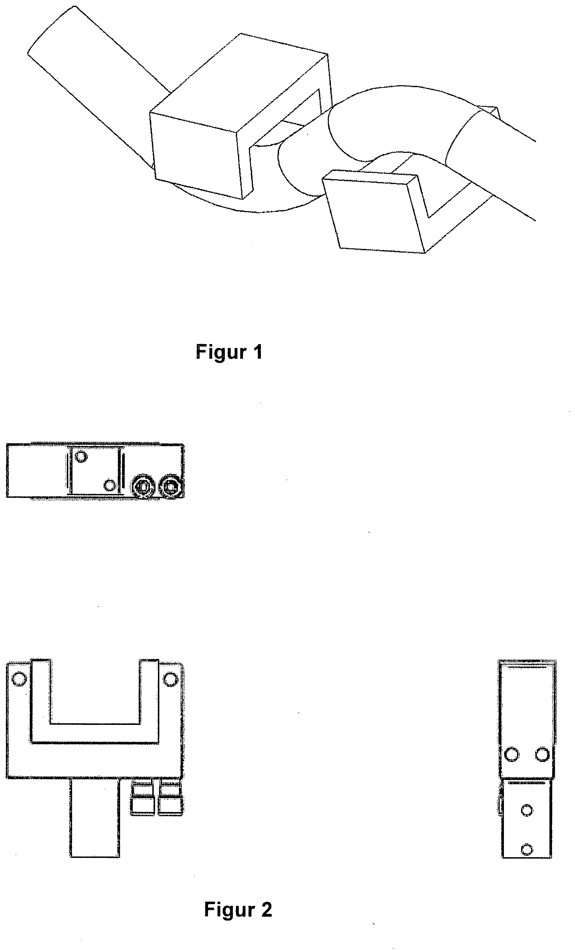

Figur 2 zeigt außen liegend die innen hohle Kupferfassung mit den beiden Anschlüssen für die Zu- und Ableitung des Kühlwassers und dem in die Fassung eingesetzten Blechpaket. Die Kupferfassung ist mit einem Zapfen versehen, an dem Konstruktionselemente zum Heranführen, zum Zurückfahren und ggf. zum Nachführen des Feldführungselements während der Erwärmung des Stabilisators angreifen können.

Die Verschiebung der Stromdichte hängt maßgeblich von der Eintauchtiefe des Stabilisators in die U-Form ab. Je tiefer eine Stelle, des Stabilisators in die U-Form eintaucht, desto mehr wird die Stromdichte von der Innenseite an die Außenseite der Biegung gedrückt. Somit ist es möglich, durch den Abstand des Blechpakets zur Biegung die Verteilung der Leistungsdichte in diesem Bereich gezielt zu steuern. Durch einen optimierten Abstand kann so eine sehr homogene Erwärmung des Bereichs erzielt werden.

Zum Härten eines Stabilisators wird dieser an seinen Enden leitend in der Konduktionseinheit eingespannt. An jede Biegung wird ein Blechpaket durch eine mechanische Verstellung wiederholgenau angelegt. Die Eintauchtiefe jeder Biegung richtet sich nach dem Krümmungsradius der Biegung. Je kleiner der Radius, desto tiefer wird das Eintauchen des Blechpakets eingestellt, um eine möglichst homogene Erwärmung sicherzustellen.

Bei einer optimalen Abstandseinstellung aller Feldführungselemente an allen Biegungen ist die Gesamterwärmung des Stabilisators sehr homogen und wird zeitlich nur durch die Umrichterleistung begrenzt. Somit ist bei entsprechend hoher Umrichterleistung eine sehr schnelle Erwärmung des Stabilisators möglich.

Die Kupferklemmen für die Stromzufuhr an den Enden des Stabilisators werden mechanisch nachgeführt, um der thermischen Längenänderung des Stabilisators bei seiner Erwärmung zu entsprechen. Durch die Homogenität der Erwärmung an den Biegungen und im gesamten Werkstück wird auch der Querverzug des Stabilisators gering gehalten, so dass hier eine hohe Prozessstabilität sichergestellt ist.

Bei wegen einer ganz besondere Geometrie des Stabilisators an den Biegungen etwa auftretenden Verzügen in nicht mehr zu vernachlässigendem Ausmaß ist es möglich, neben den Kupferklemmen auch die Feldführungselemente durch entsprechende motorische Verstellung während der Erwärmung nachzuführen.

Nach dem Erreichen der Härtetemperatur werden die Feldführungselemente wieder zurückgefahren, so dass der Stabilisator durch einen Robotergreifer aus seiner Einspannung entnommen werden kann.

Vor der Entnahme wird die gesamte Temperaturverteilung des Stabilisators durch mehrere Wärmebildkameras gemessen und überprüft. Anschließend wird der Stabilisator über ein Brausebecken mit Umwälzung positioniert. Vor dem Eintauchen wird durch die Wärmebildkamera verifiziert, dass der komplette Stabilisator zum Zeitpunkt des Abbrausens über die Ac3 Temperatur erwärmt ist.

Nach dem Abbrausevorgang wird die Temperaturverteilung des Stabilisators noch einmal überprüft, um sicherzustellen, dass er komplett abgekühlt ist. Möglich ist auch das Abbrausen ohne Eintauchen, wenn eine entsprechende Brauseeinheit vorgesehen wird.

Nach dem Brausevorgang kann der gehärtete kalte Stabilisator, je nach der angestrebten Taktzeit für die Serienfertigung, in dieselbe oder eine weitere Konduktionseinheit eingespannt werden. Nun wird der Erwärmungsvorgang mit einer niedrigeren Zieltemperatur von etwa 500 °C wiederholt und der Stabilisator somit konduktiv angelassen. Die gezielte Steuerung der Stromdichteverteilung im Stabilisator durch Feldführungselemente ermöglicht auch hierbei eine sehr homogene Temperaturverteilung, die bisher vergleichbar nur in langwierigen Ofenprozessen möglich gewesen ist.

Nach einer entsprechenden Temperaturprüfung durch mehrere Wärmebildkameras kann der Stabilisator entnommen und nochmals abgebraust werden. Die Wärmebehandlung des Härtens und Anlassens ist dann abgeschlossen.

Es versteht sich, dass die Feldführungselemente auch dann mit Vorteil homogenisierend wirken, wenn sie bei geknickten Werkstücken in den Bereichen neben dem Knick eingesetzt werden.

## Patentansprüche

1. Verfahren zur konduktiven Erwärmung von langgestreckten, einfach oder mehrfach gekrümmten metallischen Werkstücken, insbesondere Rohrprofilen,
- bei dem das in einer Konduktionseinheit zwischen Klemmen, insbesondere Kupferklemmen, eingespannte Werkstück mit Wechselstrom beaufschlagt und dadurch aufgeheizt wird,
- wobei zur Homogenisierung der Temperaturverteilung in dem Werkstück Kerne aus geschichteten Blechlamellen vorgesehen sind, die den Krümmungsinnenflächen des Werkstücks, oder diesen Flächen benachbarten Oberflächenbereichen während des Aufheizens berührungslos gegenüberliegend angeordnet werden, dabei das Werkstück teilweise umfassen und als passive Feldführungselemente wirken,
- und wobei die Feldführungselemente gekühlt werden,
**dadurch gekennzeichnet, dass**
- Feldführungselemente zum Einsatz kommen, die mit zu einem Paket verschweißten Blechen in U-Form gebildet sind, und
- dass das Blechpaket innerhalb einer einen Kühlmantel bildenden Fassung aufgenommen ist,
- wobei der Kühlmantel zur Kühlung des Blechpakets von einem Kühlmedium, insbesondere Wasser, durchströmt wird.

2. Verfahren nach Anspruch 1,
bei welchem das Werkstück zunächst gehärtet und daran anschließend angelassen wird, wobei sowohl für das konduktive Aufheizen auf die Härtetemperatur, als auch für die konduktive Erwärmung zum Anlassen, Feldführungselemente mit den Merkmalen nach Anspruch 1 eingesetzt werden.

3. Verfahren nach Anspruch 2,
**dadurch gekennzeichnet, dass**
- die Feldführungselemente nach dem Einspannen des Werkstücks zwischen den Klemmen an das Werkstück herangeführt werden und sodann die Stromzufuhr zum Werkstück erfolgt,
- die Stromzufuhr nach Erreichen der Härtetemperatur für das Werkstück unterbrochen wird und die Feldführungselemente zurückgefahren werden,
- dass das Werkstück aus den Klemmen entnommen und einer Einrichtung zum Abkühlen zugeführt wird,
- wonach das abgekühlte Werkstück entweder in dieselbe Konduktionseinheit, in der die Aufheizung auf die Härtetemperatur erfolgte, oder in eine weitere Konduktionseinheit, eingespannt wird,
- dann erneut Feldführungselemente an das Werkstück herangeführt werden,
- anschließend das Werkstück konduktiv bis auf die Anlasstemperatur erwärmt wird,
- sodann die Stromzufuhr unterbrochen wird, und die Feldführungselemente zurückgefahren werden,
- worauf das Werkstück entnommen und erneut abgekühlt wird.

4. Verfahren nach Anspruch 3,
**dadurch gekennzeichnet, dass** für die Serienfertigung gehärteter und angelassener Werkstücke die Realisierungen für das Einspannen und das Entnehmen des Werkstücks, das Heranführen und das Zurückführen der Feldführungselemente, die Steuerung der Stromzufuhr, und für das Zuführen des Werkstücks zu den Einrichtungen zum Abkühlen automatisiert erfolgen, wobei die gesamte Temperaturverteilung des Werkstücks während des Ablaufs des Verfahrens mit Wärmebildkameras gemessen und überprüft wird.

5. Anlage zur Ausführung des Verfahrens nach Anspruch 3, umfassend
- eine einzige Konduktionseinheit, vorbereitet zum konduktiven Aufheizen des Werkstoffs sowohl auf die Härtetemperatur, als auch auf die Anlasstemperatur, oder zwei Konduktionseinheiten, für die Erwärmung auf die Härtetemperatur in der einen und auf die Anlasstemperatur in der anderen,
- Vorrichtungen zum Einspannen des Werkstücks zwischen stromleitenden Klemmen und zum Entnehmen, für die einzige oder jede der beiden Konduktionseinheiten,
- Feldführungselemente mit den Merkmalen nach Anspruch 1,
- Einrichtungen zum Heranführen und zum Zurückfahren der Feldführungselemente an das Werkstück,
- Einrichtungen zum Abkühlen des Werkstücks.

6. Anlage nach Anspruch 5, umfassend zusätzlich
- Wärmebildkameras und
- Einrichtungen zur Realisierung eines vollautomatischen Ablaufs der Serienfertigung von gehärteten und angelassenen Werkstücken.

7. Anlage nach Anspruch 5 oder 6,
**dadurch gekennzeichnet, dass**
die Klemmen zum Einspannen des Werkstücks entsprechend den thermischen Längenänderungen des Werkstücks während seiner Erwärmung mechanisch nachführbar ausgebildet sind.

8. Anlage nach Anspruch 7,
**dadurch gekennzeichnet, dass** die Feldführungselemente entsprechend den bei der Erwärmung des Werkstücks auftretenden Verzügen durch eine motorische Verstellung nachführbar sind.

9. Feldführungselement zur Ausführung des Verfahrens nach einem der Ansprüche 1 bis 4, ausgebildet als Blechpaket zum berührungslosen, teilweisen Umfassen des einer Wärmebehandlung zu unterziehenden Werkstücks, mit einer Kühlung für das Feldführungselement,
**dadurch gekennzeichnet, dass**
- Bleche zu einem Paket in U-Form verschweißt sind,
- das Paket in einer einen Kühlmantel bildenden Fassung aufgenommen ist,
- wobei der Kühlmantel zur Kühlung des Blechpakets von einem Kühlmedium, insbesondere Wasser, durchströmbar ist.

10. Feldführungselement nach Anspruch 9,
**dadurch gekennzeichnet, dass** das Blechpaket in eine Kupferfassung eingelötet ist, die den Kühlmantel bildet.

## Claims

1. Method for conductive heating of elongated, single- or multiply curved metallic workpieces, in particular, pipe profiles,
- where alternating current is applied to the workpiece clamped within a conduction unit between clamps, copper clamps in particular, thereby heating it up,
- wherein, for the homogenization of the temperature distribution in the workpiece, cores made of layered laminations are provided, which are arranged opposite the curved inner surfaces of the workpiece or the surface regions adjacent to these surfaces in a contactless manner during heating, thereby partially encompassing the workpiece and acting as passive field management elements,
- and wherein the field management elements are cooled,
**characterized in that**
- field management elements are used, which are formed using metal sheets welded into a U-shaped package, and
- the laminated sheet package is received within a fitting forming a cooling jacket,
- wherein a cooling medium, water in particular, flows through the cooling jacket for cooling the laminated sheet package.

2. Method according to Claim 1,
in which the workpiece is first hardened and then annealed, wherein, both for the conductive heating up to the hardening temperature, as well as for the conductive heating for annealing, field management elements with the features according to Claim 1 are used.

3. Method according to Claim 2, **characterized in that**
- the field management elements are led toward the workpiece after clamping between the clamps and then current is applied to the workpiece;
- the current supply is interrupted after reaching the hardening temperature for the workpiece and the field management elements are retracted;
- the workpiece is removed from the clamps and supplied to a device for cooling;
- after which, the cooled workpiece is clamped either into the same conduction unit in which heating up to the hardening temperature was carried out, or into another conduction unit;
- then, field management elements are led to the workpiece again;
- then, the workpiece is conductively heated to the annealing temperature;
- then, the current supply is interrupted, and the field management elements are retracted;
- whereupon the workpiece is removed and cooled again.

4. Method according to Claim 3,
**characterized in that**, for the serial production of hardened and annealed workpieces, the implementations for clamping and removal of the workpiece, the leading to and retraction of the field management elements, the control of the current supply, and for supplying the workpiece to the devices for cooling are carried out automatically, wherein the entire temperature distribution of the workpiece is measured and checked during the course of the method using thermal imaging cameras.

5. System for carrying out the method according to Claim 3, comprising
- a single conduction unit, prepared for the conductive heating of the material to both the hardening temperature as well as to the annealing temperature, or two conduction units for heating to the hardening temperature in the one, or for heating to the annealing temperature in the other,
- devices for clamping the workpiece between current-conducting clamps and for removal, for the single conduction unit or for each of the two conduction units,
- field management elements with the features according to Claim 1,
- devices for leading the field management elements toward and retracting them from the workpiece,
- devices for cooling the workpiece.

6. System according to Claim 5, additionally comprising
- thermal imaging cameras and
- devices for implementing a fully automatic process for the series production of hardened and annealed workpieces.

7. System according to Claim 5 or 6,
**characterized in that**
the clamps for clamping the workpiece are designed so that they can be mechanically adjusted in accordance with the thermal length changes of the workpiece while it is being heated.

8. System according to Claim 7,
**characterized in that** the field management elements can be adjusted in accordance with the distortions occurring during the heating of the workpiece by means of motorized adjustment system.

9. Field management element for carrying out the method according to any one of Claims 1 to 4, designed as a laminated sheet package for partially encompassing in a contactless manner the workpiece being subjected to a heat treatment with a cooling system for the field management element,
**characterized in that**
- metal sheets are welded into a U-shaped package,
- the package is received within a fitting forming a cooling jacket,
- wherein cooling medium, water in particular, can flow through the cooling jacket for cooling the laminated sheet package.

10. Field management element according to Claim 9, **characterized in that** the laminated sheet package is soldered into a copper fitting that forms the cooling jacket.

## Revendications

1. Procédé, destiné à chauffer par conduction des pièces à usiner métalliques allongées, recourbées une ou plusieurs fois, notamment des profilés tubulaires,
- lors duquel l'on soumet à un courant alternatif la pièce à usiner enserrée dans une unité de conduction entre des bornes, notamment des bornes en cuivre et on la chauffe de ce fait,
- pour homogénéiser la distribution thermique dans la pièce à usiner, des noyaux en lamelles de tôle stratifiées étant prévus, que l'on place sans contact pendant le processus de chauffage au vis-à-vis des surfaces intérieures des courbures de la pièce à usiner ou de zones superficielles voisines desdites surfaces, qui à cet effet entourent partiellement la pièce à usiner et font office d'éléments passifs de guidage du champ,
- et les éléments de guidage du champ étant refroidis,
**caractérisé en ce que**
- l'on utilise des éléments de guidage du champ qui sont formés de tôles soudées en un paquet en forme de U et
- **en ce que** le paquet de tôles est réceptionné à l'intérieur d'une monture formant une enveloppe de refroidissement,
- pour refroidir le paquet de tôle, l'enveloppe de refroidissement étant traversée par un fluide réfrigérant, notamment de l'eau.

2. Procédé selon la revendication 1,
lors duquel l'on soumet d'abord la pièce à usiner à une trempe, et par la suite à un revenu, aussi bien pour le processus de chauffage par conduction à la température de trempe que pour le processus de chauffage par conduction pour le revenu, des éléments de guidage de champ présentant les caractéristiques selon la revendication 1 étant mis en œuvre.

3. Procédé selon la revendication 2, **caractérisé**
- **en ce qu'**une fois que la pièce à usiner a été enserrée entre les bornes, l'on ramène les éléments de guidage de champ vers la pièce à usiner et ensuite, l'apport d'électricité vers la pièce à usiner a lieu,
- **en ce que** l'on interrompt l'apport d'électricité après l'atteinte de la température de trempe pour la pièce à usiner et l'on ramène vers l'arrière les éléments de guidage de champ,
- **en ce que** l'on retire la pièce à usiner des bornes et on l'amène vers un système de refroidissement,
- suite à quoi, l'on enserre la pièce à usiner refroidie, soit dans la même unité de conduction dans laquelle a eu lieu le processus de chauffage à la température de trempe ou dans une autre unité de conduction,
- puis l'on ramène de nouveau les éléments de guidage de champ vers la pièce à usiner,
- par la suite, l'on fait chauffer par conduction la pièce à usiner jusqu'à la température de revenu,
- l'on interrompt ensuite l'apport d'électricité, et on ramène vers l'arrière les éléments de guidage de champ,
- suite à quoi, l'on retire la pièce à usiner pour la refroidir une fois encore.

4. Procédé selon la revendication 3,
**caractérisé en ce que** pour la fabrication en série de pièces à trempées et revenues, l'enserrage et le retrait de la pièce à usiner, l'amenage et le retour des éléments de guidage de champ, la commande de l'apport d'électricité et d'aménagé de la pièce à usiner vers les systèmes de refroidissement s'effectuent automatiquement, la distribution de température dans l'ensemble de la pièce à usiner pendant le déroulement du processus étant mesurée et vérifiée à l'aide de caméras thermiques.

5. Installations, destinée à réaliser le procédé selon la revendication 3, comprenant
- une unique unité de conduction, préparée pour chauffer par conduction la pièce à usiner aussi bien à la température de trempe, qu'également à la température de revenu ou deux unités de conduction, destinées à chauffer à la température de trempe dans l'une et à la température de revenu dans l'autre,
- des dispositifs, destinés à enserrer la pièce à usiner entre des bornes conductrices d'électricité et à les retirer, pour l'unique ou pour chacune des unités de conduction,
- des éléments de guidage de champ présentant les caractéristiques selon la revendication 1,
- de systèmes, destinés à amener des éléments de guidage de champ vers la pièce à usiner, et à les ramener vers l'arrière
- des systèmes, destinés à refroidir la pièce à usiner.

6. Installation selon la revendication 5, comprenant additionnellement
- des caméras thermiques et
- des systèmes assurant le déroulement entièrement automatique de la fabrication en série de pièces à usiner trempées et revenues.

7. Installation selon la revendication 5 ou 6, **caractérisé en ce que**
les bornes destinées à enserrer la pièce à usiner en fonction des variations de longueur thermiques de la pièce à usiner pendant qu'on la chauffe sont conçues de manière mécaniquement traçable.

8. Installation selon la revendication 7,
**caractérisé en ce que** les éléments de guidage de champ sont traçables par un réglage motorisé en fonction des allongements dus au chauffage de la pièce à usiner.

9. Élément de guidage de champ, destiné à réaliser le procédé selon l'une quelconque des revendications 1 à 4, conçu sous la forme d'un paquet de tôles qui doit entourer partiellement sans contact la pièce à usiner qui doit être soumise à un traitement thermique, avec un refroidissement de l'élément de guidage de champ, **caractérisé en ce que**
- les tôles sont soudées en un paquet en forme de U,
- le paquet est réceptionné dans une monture formant une enveloppe de refroidissement,
- pour refroidir le paquet de tôles, l'enveloppe de refroidissement étant susceptible d'être traversée par un fluide réfrigérant, notamment de l'eau.

10. Élément de guidage de champ selon la revendication 9, **caractérisé en ce que** le paquet de tôles est brasé dans une monture en cuivre, qui forme l'enveloppe de refroidissement.
